# EUROPEAN PATENT APPLICATION

(11) **EP 3 808 236 A1**
(43) Date of publication of application: **21.04.2021**
(21) Application number: 20202106.9
(22) Date of filing: 15.10.2020
(51) Int. Cl.: A47J 42/06, A47J 42/40, A47J 42/46

(54) **COFFEE GRINDER**

(30) Priority: 16.10.2019 IT 201900018980
(71) Applicant: Roger Technology S.R.L., 31021 Mogliano Veneto (TV) (IT)
(72) Inventor: FLORIAN, Dino, 31021 Mogliano Veneto (Treviso) (IT)
(74) Representative: Piovesana, Paolo

(57) **Abstract**

Coffee grinder with a container (28) of coffee beans to be ground, with a grinding chamber (16) placed in the lower part of said container, with a base (2,2') for supporting said container and housing of a motor (4) and with a pair of coaxial grinders (10, 12), one (10) fixed with respect to said base (2,2') and one (12) rotating, integral with the shaft (14) of said motor (4), with a first chamber (20) for collecting the coffee powder and with a first rotating blade (34), integral with said rotating grinder (12) and having at least one arm (38) rotating within said first collection chamber (20), characterized in that said motor (4) is a torque motor and to its shaft (14) is mechanically coupled in rotation a second shaft (49) for rotating a second rotating blade (44,54,64), housed within a second collection chamber (40,60,72), distinct from said first collection chamber (20) but communicating and partially Interfering with this, said second collection chamber (40,60,72) being provided with an opening (52) for discharging said coffee powder from the coffee grinder.

## Description

The present invention relates to a coffee grinder, i.e. an apparatus which is essentially intended for grinding coffee beans, but which, given its characteristics and versatility of use, could also be used for grinding other substantially solid products of small size, such as almonds, hazelnuts, pieces of chocolate and many other products that must be reduced to powder of the desired granulometry.

Since, however, express reference is made in the present description to coffee grinding, we will always and only speak of coffee grinders, meaning however that in general terms the invention is applicable to an appliance which, instead of grinding coffee beans, can be used to grind other products of the type mentioned above.

Known coffee grinders generally comprise an upper container intended to contain the beans to be ground, a base or machine body, which supports a container for the coffee beans and which houses an electric motor and a pair of grinders, placed on the bottom of said container and comprising a fixed grinder, generally annular in shape, constrained to the body of the coffee grinder and a rotating grinder, generally with a frusto-conical or ogival shape or the like, placed inside the fixed grinder and integral with the rotation shaft of said electric motor.

There are also known coffee grinders with flat grinders consisting of two superimposed disks, one of which is fixed and one movable, between which the coffee beans to be ground are introduced.

Regardless, however, of the shape of the two grinders, they are in any case housed within a grinding chamber, which is placed under the container of the coffee beans and extends below the grinders into a chamber for collecting the coffee powder. Inside this collection chamber there is a rotating blade with several arms, which is integral with the rotating grinder and which has the function of collecting the coffee powder from the bottom of the chamber itself to make it come out by centrifugal effect through an opening obtained in it. It is evident that the higher the rotation speed of the rotating blade, the higher the centrifugal force which causes the coffee powder to escape from the collection chamber; at the same time, since the rotating blade is integral with the rotating grinder, the higher the rotation speed of both, the higher the heating to which the coffee is subjected during grinding and this constitutes a major drawback, as the temperature alters the aromatic properties of the coffee powder and the organoleptic characteristics of the coffee infusion that is prepared with it.

For this reason it has already been proposed to operate the coffee grinder at low speed, but the lower the rotation speed of the grinder and the lower the centrifugal effect exerted by the rotating blade integral with it, to the point of making it difficult to escape from the collection chamber of the coffee powder due to the centrifugal effect.

To avoid this inconvenience, it has also been proposed to exert a certain pressure in the container of the coffee beans capable of pushing them between the grinders and causing a more complete filling of the collection chamber with the coffee powder, so that the rotating pallet can push the powder itself towards the discharge opening even at low rotation speed and therefore with a reduced centrifugal effect.

However, even this solution has not proved to be satisfactory since during the periods of non-use of the coffee grinder the collection chamber is practically full of coffee powder and this constitutes a serious drawback as it has been found that only after a very short time from grinding, in the order of tens of minutes, the coffee powder can lose approximately 80% of its organoleptic characteristics.

Furthermore, it has been found that in any coffee grinding process the granulometric curve, which expresses the quantity of coffee powder obtained at the various granulometries, generally has a main peak in correspondence with the granulometry linked to the distance between the grinders and a secondary peak, corresponding to the finest particles that inevitably form in any grinding process.

For this reason it is usual to try to compact these fine particles in order to try to keep them adherent to the powders with larger particle size and in this way to reduce the inconvenience due to them and consisting in their tendency to disperse in the air, to become electrified and to adhere due to electrostatic to the external surfaces of the coffee grinder. This compaction is generally obtained by reducing the exit section of the coffee powder from the coffee grinder, and this creates a sort of bottleneck, which if on the one hand reduces the quantity of fine powders that would otherwise be dispersed outside, on the other hand it causes an accumulation of coffee powder inside the collection chamber when the coffee grinder is inactive, with the problems already indicated.

Another drawback of traditional coffee grinders is that the accumulation of coffee powder in the internal parts of the coffee grinder requires frequent cleaning and these, in addition to entailing periods of non-use of the coffee grinder, involve operations that are often complex, long and expensive.

The purpose of the invention is to eliminate all these drawbacks and to provide a coffee grinder which on the one hand is capable of grinding the coffee at low or very low speed of rotation of the grinder and on the other hand significantly reduces the amount of coffee present in the collection chamber when the coffee grinder is inactive.

Another object of the invention is to provide a coffee grinder that can operate both with conical and flat grinders.

Another object of the invention is to provide a coffee grinder which minimizes the stagnation of coffee powder in the internal parts of the machine.

Another object of the invention is to provide a coffee grinder capable of self-cleaning during operation.

Another object of the invention is to provide a coffee grinder in which the dispersion of the fine coffee powders on the outside is practically eliminated.

According to the invention, all these objects and others that will result from the following description are achieved jointly or separately with a coffee grinder as defined in claim 1.

The present invention is further clarified hereinafter in some of its preferred embodiments, reported for the purpose purely by way of non-limiting example, with reference to the attached drawings, in which:
- Figure 1: shows a general perspective view in section of a coffee grinder according to the invention in a first embodiment,
- Figure 2: shows it in an exploded perspective view,
- Figure 3: schematically shows according to the horizontal section III-III of fig. 1 the enlarged detail of the two rotating blades in the respective coffee powder collection chambers,
- Figure 4: shows it in the same view of figure 2 in a second embodiment,
- Figure 5: shows it in a view similar to that of fig. 3 but in this second embodiment,
- Figure 6: shows it in general perspective view and partially sectioned in a third embodiment,
- Figure 7: shows it in exploded perspective view in this third embodiment
- Figure 8: shows in perspective view the enlarged detail of the two rotating vanes, and
- Figure 9: shows the same detail according to the horizontal schematic section IX-IX of fig. 6.

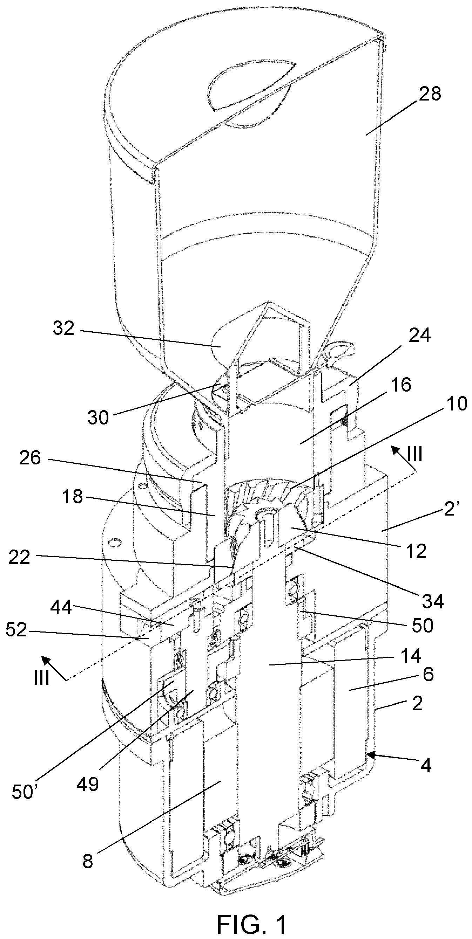

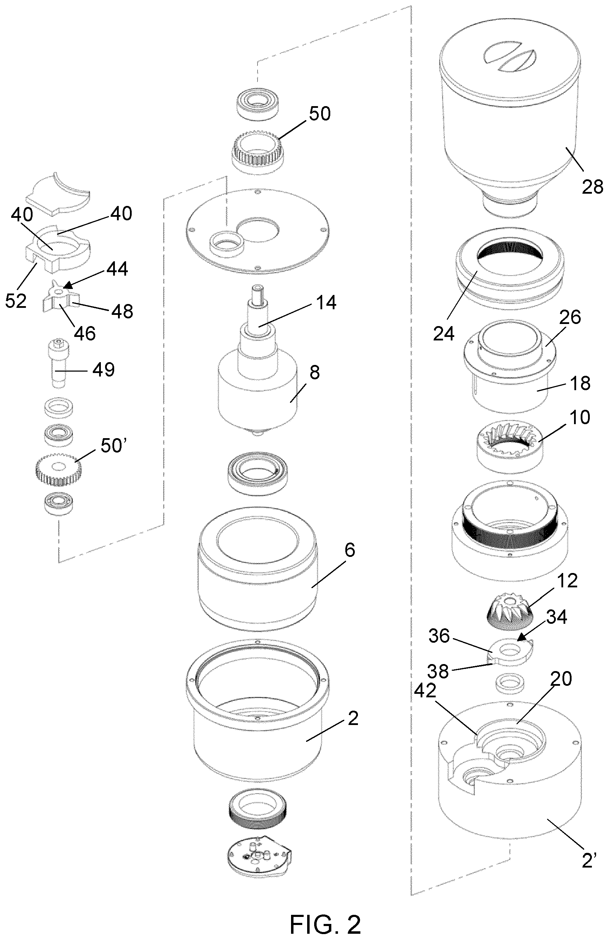

As can be seen from figures 1-3, the coffee grinder according to the invention comprises in a first embodiment a base or machine body 2,2', in which an electric motor 4 of the type known as a torque motor (direct drive) with a stator 6 with vertical axis constrained to the base itself and with a rotor 8 housed inside the stator.

Above the base 2' there is a pair of grinders, and more precisely a fixed external annular grinder 10 and an internal frusto-conical or ogival grinder 12, constrained to the upper end of the shaft 14 of the rotor 8, 10, 12.

The two grindersare housed inside a grinding chamber 16, having an approximately cylindrical shape, with a side wall 18 constrained to the base 2' and bearing the fixed grinder 10 constrained.

Below the pair of grinders 10, 12, between these and the upper part of the base 2', a first chamber 20 for collecting the coffee powder is formed. It has a substantially cylindrical shape, houses the upper extremal portion of the shaft 14 inside and extends radially outwards beyond the grinding slot 22, i.e. the slot that separates the rotating grinder 12 from the fixed grinder 10 and which is adjustable in its width by axial adjustment of the fixed grinder 10 with respect to the rotating grinder 12, in order to vary the granulometry of the coffee powder produced.

This axial adjustment is obtained with traditional systems, for example by means of a threaded ring nut 24 cooperating with springs (not shown), interposed between a flange 26, projecting outward from the side wall 18 of the grinding chamber 16, and the upper edge of the base portion which houses it and with respect to which said side wall can slide axially.

The grinding chamber 16 communicates at the top with a container 28 for the coffee beans, through a passage 30 topped by a conical element 32, having traditional accident prevention functions.

Within the first collection chamber 20 a first blade 34 can rotate, constrained to the rotating mill 12 and comprising a sort of central hub 36 and a plurality of arms 38, extending radially until they reach the side wall of the collection chamber itself or remain slightly separated from the latter.

In the example shown, the first rotating vane 34 is provided with two arms 38, even if this number can vary.

In the base 2' of the coffee grinder, in which the grinding chamber 16 and the first collection chamber 20 are formed, there is also a second collection chamber 40, which partially interferes with the first collection chamber 20, in the sense that it has a portion in which the two chambers 20 and 40 intersect and communicate with each other through an opening 42.

In the first embodiment, illustrated in Figures 1-3, the second collection chamber 40 is also cylindrical and coaxially houses a second rotating blade 44, which comprises a central hub 46, coaxial with the second collection chamber 40, and one or more arms 48, extending radially from this, until it reaches the side wall of the collection chamber itself.

The second rotating blade 44 is mounted on a shaft 49 parallel to the shaft 14 of the rotor 8 of the torque motor 4 and is coupled to said shaft, by means of a pair of gears 50, 50' which in the particular example have a reduction ratio 1 : 1, even if this value is not essential and in some cases it could advantageously be greater or less than unity.

In any case, given the interference between the first collection chamber 20 and the second collection chamber 40, it is necessary that the two rotating vanes 34,44 are mounted on the respective shafts 14,49 so as not to hinder each other during their rotations.

The second collection chamber 40 presents, on its side wall, preferably in a position diametrically opposite to the opening 42 for communication with the first collection chamber 20, by an opening 52 for discharging the coffee powder from the coffee grinder.

It is preferable that the height of the first collection chamber 20 is lower than the height of the second collection chamber 40 and that the floor of the first collection chamber 20 is placed at a level slightly higher than the floor of the second collection chamber 40, as is clear from the drawings.

It is envisaged that an interchangeable element (not shown) can be applied to the opening 52 for discharging the coffee powder, capable of modifying the discharge port to reduce it more or less and thus modify the degree of compaction of the coffee powder before it comes out of the coffee grinder.

The operation of the coffee grinder according to the invention in this first embodiment is as follows.

Before proceeding with the grinding of the coffee beans, it is advisable to adjust the granulometry of the powder to be obtained. This operation can be carried out easily by acting on the threaded ring nut 24, which, operated in one direction, brings the fixed grinder 10 closer to the rotating grinder 12, reducing the width of the grinding slot 22 and therefore the granulometry of the coffee powder, while operated in the opposite direction, allows the elastic reaction of the springs interposed between the flange 26 of the side wall 18 of the first grinding chamber 20 and the upper edge of the body 2' of the coffee grinder to increase the width of the grinding slot 22.

Advantageously, the threaded ring nut 24 can be associated with a graduated scale which makes it easier to identify the correct positions of the ring itself corresponding to the different grain sizes of the coffee powder.

Once this preliminary adjustment has been made, the coffee grinder is ready to work: it is sufficient to feed the torque motor 4 so as to make it rotate at the desired speed, which preferably can vary from 0 to about 600 rpm, and which, therefore, can also be operated at extremely low speeds, with the double advantage of not heating the coffee powder and of making a precise dosage of the amount of powder obtained thanks to a control of the number of revolutions (and any fractions of a revolution) that the motor must perform to supply the desired quantity of coffee with maximum precision.

As the coffee powder comes out of the grinding slot 22 and falls into the underlying first collection chamber 20, the first rotating blade 34 continuously collects it and transfers it to the second collection chamber 40 through the opening 42 and at the same time, thanks to an adequate profile of the arms of the two rotating vanes 34,44 and their angular position on the respective shafts 14,49, it can exert with the arms 48 of the second blade 44 a sliding action on the arms 38 of the first blade 34 to remove completely any dust adhering to them.

If then the coupling between the shaft 14 of the torque motor 4 and the shaft 49 of the second rotating blade 44 is obtained with a chain of gears formed not by two gears 50,50' but by three gears, the two rotating vanes 34, 44 rotate in the same direction rather than in the opposite direction, and this favors the cleaning action of the arms 38 of the first rotating blade 34 by the arms 48 of the second rotating blade 44.

The presence of the two rotating blades 34, 44 appears quite advantageous especially in the case of a transmission ratio between the two gears 50, 50' higher than the unit, for example 2:1, since it allows to keep the rotation speed of the first rotating blade and therefore of the grinder 12 low, for the benefit of a slow grinding, which does not cause any heating of the coffee powder, and at the same time activates the second rotating blade 44 at high rotation speed, so as to impress the coffee powder in the second collection chamber 42 with a high centrifugal force, which favors its escape through the discharge opening 52.

If then this discharge opening 52 is suitably shaped and / or a throttling element is applied to it to reduce its passage of the powder of coffee, this undergoes a sort of compaction which, although slight, allows the finer particles to adhere to the larger particles and to avoid their uncontrolled diffusion outside.

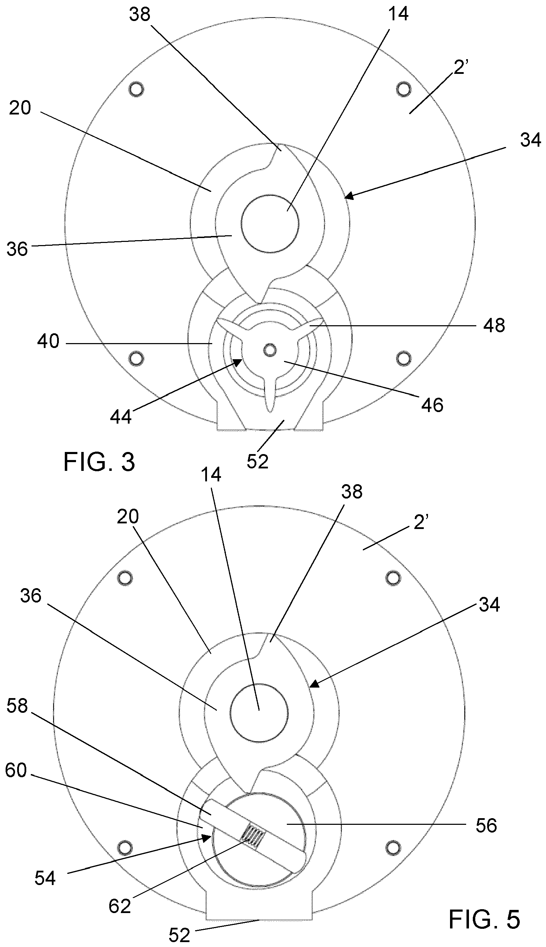

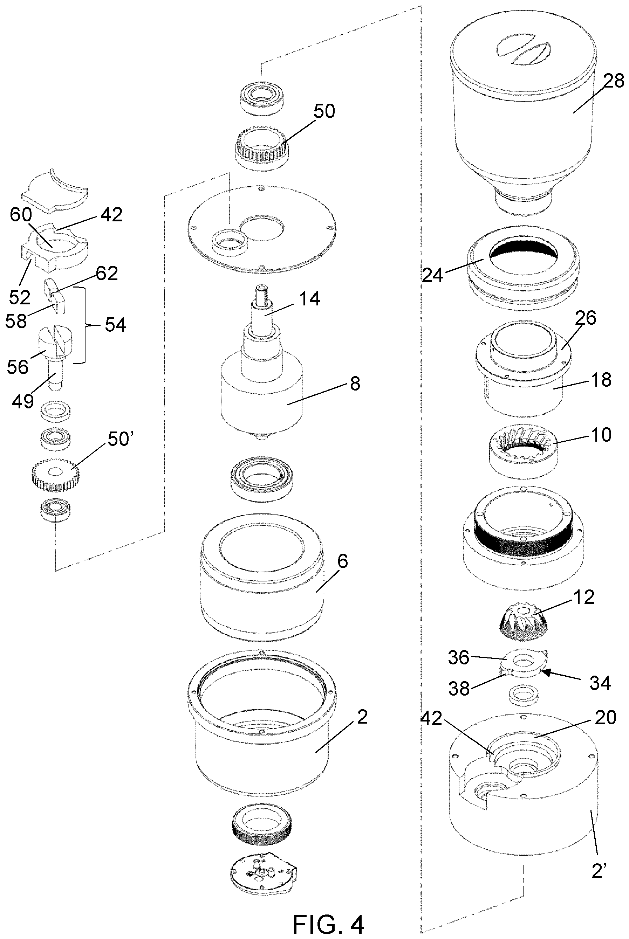

A second embodiment, illustrated in Figures 4 and 5 in which parts analogous to those of the first embodiment are numbered in the same way, differs from the first embodiment essentially in having the second rotating vane 54 mounted eccentrically in the second chamber 40 of collection of coffee powder.

More particularly, the second rotating vane 54 comprises a hub 56 integral with the shaft 49 and presenting plurality of radial cavities, within which are housed and can slide axially, corresponding arms 58 which advantageously have a height substantially equal to the internal height of the second collection chamber 60 and at the height of the hub 56 and are associated with springs 62, which tend to push elastically the respective arm 58 so that its outer end always remains adherent to the side wall of the second collection chamber 60, regardless of the distance between this and the hub, a distance that is variable thanks to the eccentricity between the two. In the illustrated example a single diametrical cavity is shown, which corresponds to two aligned radial cavities, but from a more general point of view the number of these radial cavities and of the arms 58 could also be different.

This eccentricity is made so that the end of the arms 58 of the rotating vane 54 is at the minimum distance from the side wall of the second collection chamber 60 in correspondence with the discharge opening 52, with reference to the direction of rotation of the second vane 44, so that the coffee powder received by the first collection chamber 20 is subjected to a certain compaction before leaving the coffee grinder.

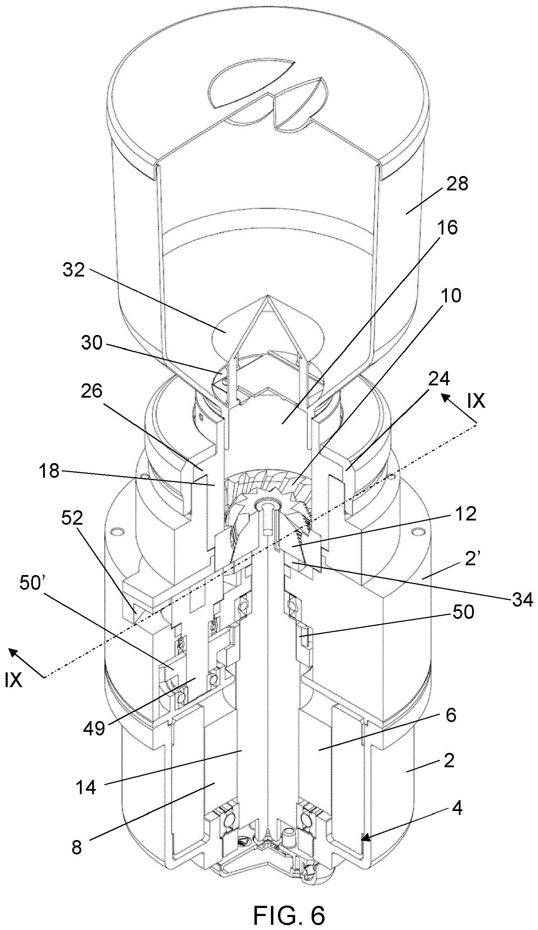

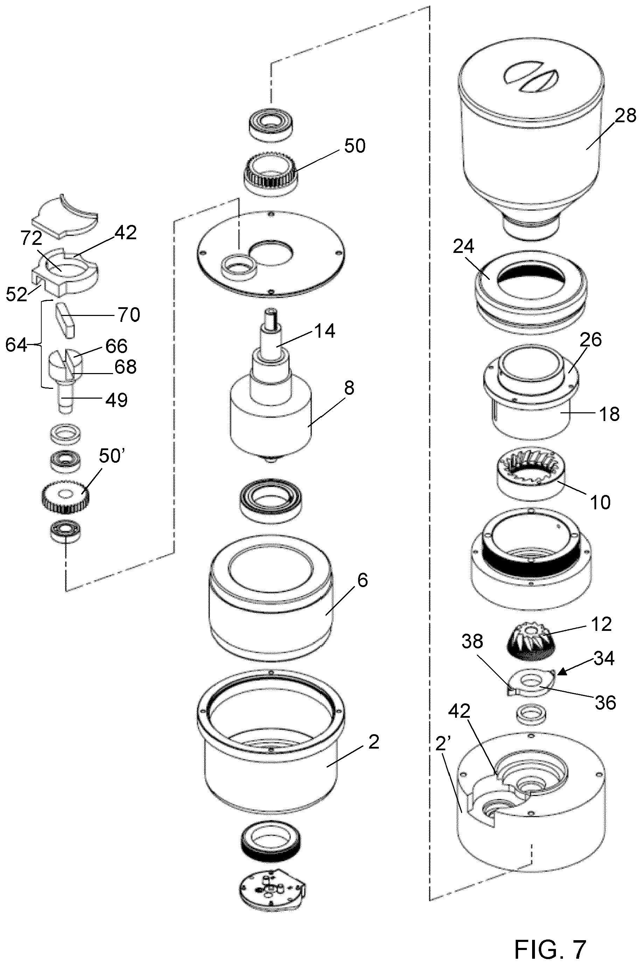

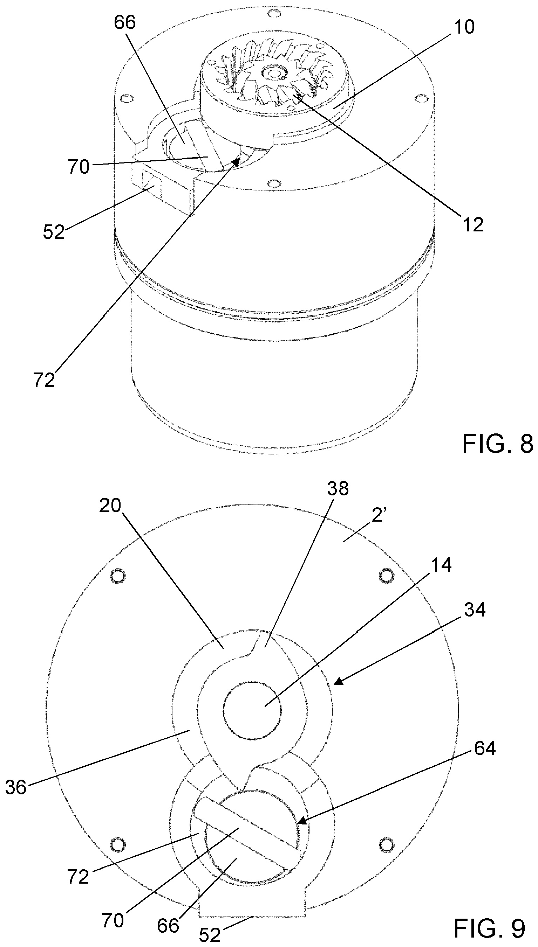

A third embodiment, illustrated in Figures 6-9, in which parts analogous to those of the previous embodiments are numbered in the same way, provides that the second rotating blade 64 comprises a hub 66 integral with the shaft 49 and presenting diametrical or substantially diametrical cavity 68, intended to house a single arm 70, having a length greater than the length of said cavity 68, so as to protrude therefrom with both its ends.

The rotating pallet 64 is positioned within the second collection chamber 72 so that its hub 66 is at the minimum distance from the side wall of the second collection chamber itself in correspondence with the discharge opening 52, as in the second embodiment; in this case, however, the second collection chamber 72 has the side wall shaped so that for any angular position of the second rotating blade both ends of the arm 70 are substantially in contact with said side wall.

This third embodiment is more complex in execution, given the need to give a very precise shape to the second collection chamber 72, different from the cylindrical embodiment that characterizes the first and second embodiments.

At the same time it has the same advantages as the second embodiment with respect to the first in terms of compacting the coffee powder before it emerges from the discharge opening 52, and at the same time it is more advantageous thanks to the elimination of the springs, which are necessary to keep the arms 58 with the outer end always adhering to the side wall of the second collection chamber 60, but are subject to possible blockages due to the presence of coffee powder or other dirt, which has accidentally reached them.

## Claims

1. Coffee grinder with a container (28) of coffee beans to be ground, with a grinding chamber (16) placed in the lower part of said container, with a base (2,2') for supporting said container and housing of a motor (4) and with a pair of coaxial grinders (10, 12), one (10) fixed with respect to said base (2,2') and one (12) rotating, integral with the shaft (14) of said motor (4), with a first chamber (20) for collecting the coffee powder and with a first rotating blade (34), integral with said rotating grinder (12) and having at least one arm (38) rotating within said first collection chamber (20), **characterized in that** said motor (4) is a torque motor and to its shaft (14) is mechanically coupled in rotation a second shaft (49) for rotating a second rotating blade (44,54,64), housed within a second collection chamber (40,60,72), distinct from said first collection chamber (20) but communicating and partially Interfering with this, said second collection chamber (40,60,72) being provided with an opening (52) for discharging said coffee powder from the coffee grinder.

2. Coffee grinder according to claim 1, **characterized in that** the shaft (14) of said torque motor (4) is coupled to said second shaft by means of a chain of gears (50,50').

3. Coffee grinder according to claim 2, **characterized in that** said gear chain is formed by three gears.

4. Coffee grinder according to one or more of the preceding claims **characterized in that** the transmission ratio from the first gear to the last gear of said gear chain is greater than unity.

5. Coffee grinder according to one or more of the preceding claims **characterized in that** said second rotating blade (44,54,64) comprises at least one arm (48) starting from a hub (46) integral in rotation to said second shaft (49).

6. Coffee grinder according to one or more of the preceding claims, **characterized in that** said second rotating blade (44,54,64) has a height substantially equal to the height of said second collection chamber (40,60,72).

7. Coffee grinder according to one or more of the preceding claims **characterized in that** said first rotating blade (34) and said second rotating blade (44,54,64) are partially interpenetrating but are synchronized in their rotation movements so as to avoid interference between their respective arms.

8. Coffee grinder according to one or more of the preceding claims **characterized by** the fact that said second collection chamber (40) has a cylindrical shape and coaxially houses said second rotating blade (44), which comprises a central hub (46), from which at least one arm (48) with radial development adheres during the rotations to the internal side wall of said second collection chamber (40) departs.

9. Coffee grinder according to one or more of the preceding claims, **characterized in that** said second collection chamber (60) has a cylindrical shape and houses said second rotating blade (54) which comprises a cylindrical hub (56) having an axis eccentric rotation with respect to the axis of said second collection chamber (60), and at least one arm (58), which is axially movable within a corresponding radial cavity obtained in said hub (56) and is associated with a spring (62) tending to elastically push said arm (58) outwards, the eccentricity of said hub being such as to keep it closer to said discharge opening (52) for the coffee powder from said second collection chamber (60).

10. Coffee grinder according to claim 9 **characterized in that** the cylindrical hub (56) of said second collection chamber (60) presents a diametrical cavity in which two arms (58) are slidable, between which a spring is interposed (62) tending to keep them elastically spaced.

11. Coffee grinder according to one or more of the preceding claims, **characterized in that** said second rotating blade (64) comprises a hub (66) presenting through cavity (68) having a height substantially equal to the height of said second collection chamber (72) and housing within it an arm (70) freely movable axially along said through cavity (68), having a height substantially equal to the height of the latter and a length greater than its length, said second rotating blade (64) being mounted eccentrically within said second collection chamber (72), which has the side wall shaped so that, for any angular position of said hub (66), both ends of said arm (70) are in contact with it.

12. Coffee grinder according to one or more of the preceding claims **characterized in that** the height of said first collection chamber (20) is lower than the height of said second collection chamber (40,60,72) and the bottom of said first collection chamber (20) is placed at a higher level than the bottom of said second collection chamber (40,60,72).

13. Coffee grinder according to one or more of the preceding claims, **characterized in that** it comprises a plurality of different elements for delimiting the discharge port of the opening itself of said second collection chamber (40,60,72), selectively applicable to the opening itself (52) to change the degree of compaction of the coffee powder before it comes out of the coffee grinder.

14. Coffee grinder according to one or more of the preceding claims, **characterized by** the fact that the opening (52) for discharge of the coffee powder from said second collection chamber (40,60,72) is situated in a position substantially opposite to the opening (42) of communication between said first collection chamber (20) and said second collection chamber (40,60,72).

15. Coffee grinder according to one or more of the preceding claims, **characterized by** the fact that the arms (38,48) of the rotating blades (34, 44) housed within said first collection chamber (20) and said second collection chamber (40) have profiles configured so that during operation of the coffee grinder the arms (48) of said second rotating blade (44) exert a sliding action on the arms (38) of said first rotating blade (34).
